(19) Europäisches Patentamt
European Patent Office
Office européen des brevets

(11) **EP 1 962 423 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(21) Anmeldenummer: **07003815.3**

(22) Anmeldetag: **23.02.2007**

(51) Int Cl.:
**H03H 7/48** *(2006.01)* **H01P 5/12** *(2006.01)*
**H04B 1/00** *(2006.01)*

(54) **Anordnung zur Kopplung hochfrequenter Ausgangssignale**

Device for coupling high frequency output signals

Agencement destiné à l'accouplement de signaux de sortie haute fréquence

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**27.08.2008 Patentblatt 2008/35**

(73) Patentinhaber: **Nokia Solutions and Networks GmbH & Co. KG**
**81541 Munich (DE)**

(72) Erfinder:
• **Heinz, Helmut**
**86842 Türkheim (DE)**

• **Jelonnek, Björn, Dr.**
**89079 Ulm (DE)**
• **Splett, Armin, Dr.**
**89079 Ulm (DE)**

(74) Vertreter: **Weidel, Gottfried et al**
**Nokia Solutions and Networks GmbH & Co. KG**
**CEF T&I IPR Patent Administration**
**80240 Munich (DE)**

(56) Entgegenhaltungen:
**EP-A- 1 043 800    US-A1- 2003 186 656**

**Beschreibung**

Die Erfindung betrifft eine Anordnung zur Kopplung hochfrequenter Ausgangssignale gemäß Anspruch 1. Sollen mehrere hochfrequente Ausgangssignale von Sendeeinheiten beispielsweise in Mobilfunk-Basisstationen zu einem Signal kombiniert werden, das über eine gemeinsame Sendeantenne der Basisstation ausgestrahlt wird, werden in der Regel spezielle Koppeleinrichtungen eingesetzt. Für eine verlustfreie Kombination der Signale ist es erforderlich, dass sich die Ausgangssignale der einzelnen Sendeeinheiten einander entsprechen, d.h. synchronisiert sind. Hierzu ist in der Koppeleinrichtung ein spezieller Detektor integriert, der erkennt, ob die zu kombinierenden Signale synchronisiert sind. Abweichungen der Signale werden über einer Rückleitung an die Sendeeinheiten signalisiert, um eine Synchronisation der Ausgangssignale einleiten zu können.

Aus US 2003/186656 ist ein Verfahren zur
Kopplung zweier AC Wellenformen bekannt. Eine Aufgabe der vorliegenden Erfindung ist es nun, eine Anordnung zur Kopplung hochfrequenter Ausgangssignale vorzuschlagen, bei der auf den Detektor in der Koppeleinrichtung und die damit verbundene Rückleitung verzichtet werden kann.

Diese Aufgabe wird durch eine Anordnung zur Kopplung hochfrequenter Ausgangssignale mit den Merkmalen von Anspruch 1 gelöst. Weitere Ausgestaltungen der Erfindung ergeben sich aus den abhängigen Ansprüchen.

Ein wesentlicher Gedanke der Erfindung besteht zunächst darin, für eine Zusammenführung bzw. Kombination von hochfrequenten Ausgangssignalen ein insbesondere im Wesentlichen verlustfreies Kopplungsnetzwerk zu verwenden, das Eingangsnetzwerke für die zu koppelnden hochfrequenten Signale aufweist, von denen jedes jeweils derart angepasst ist, dass ein Differenzsignal am jeweils anderen Eingangsnetzwerk reflektiert wird, beispielsweise wird ein typischerweise ein- und ausgangsseitig angepasstes Kopplungsnetzwerk verwendet, das antennenseitig angepasste Leitungsteiler aufweist, die für Differenzsignale an den anderen Eingängen keine Anpassung aufweisen. Beispielsweise kann anstelle eines Wilkinson-Teilers eine Leitungsstruktur mit einem modifizierten Widerstandswert R eingesetzt werden. Aufgrund der fehlenden Anpassung wird ein Differenzsignal der Ausgangssignale vom Kopplungsnetzwerk reflektiert, das bei einer nicht erfolgten Synchronisation der Ausgangssignale entstehen kann. Das reflektierte Differenzsignal oder davon abgeleitete Kenngrößen wird bzw. werden dann als Referenzsignal(e) für eine Synchronisation der Ausgangssignale der Sendeeinheiten verwendet. Dadurch ist es nicht erforderlich, einen speziellen Detektor in der Koppeleinrichtung für hochfrequente Signale und eine Rückleitung an die Sendeeinheiten vorzusehen. Vielmehr kann durch geeignete Auswertung eines reflektierten Differenzsignals eine Synchronisation der Ausgangssignale von Sendeeinheiten vorgenommen werden, um eine möglichst hohe Leistung eines kombinierten Ausgangssignals zu erzielen.

Die Erfindung betrifft nun gemäß einer Ausführungsform eine Anordnung zur Kopplung hochfrequenter Ausgangssignale, die zum Abstrahlen über eine gemeinsame Antennenanordnung vorgesehen sind, mit
einer ersten und einer zweiten Sendeeinheit, die jeweils ausgebildet sind, aus einem digitalen Eingangssignal ein hochfrequentes Ausgangssignal zur Abstrahlung über eine gemeinsame Antennenanordnung zu erzeugen, und
einem Kopplungsnetzwerk, das zwei Eingangsnetzwerke für die hochfrequenten Ausgangssignale und ein antennenseitiges Ausgangsnetzwerk zum Ankoppeln an die gemeinsame Antennenanordnung umfasst, wobei jedes Eingangsnetzwerk jeweils derart angepasst ist, dass ein Differenzsignal am jeweils anderen Eingangsnetzwerk reflektiert wird, wobei
jede Sendeeinheit derart ausgebildet ist, dass sie ein empfangenes reflektiertes Differenzsignal auswertet und abhängig von der Auswertung eine Synchronisation des erzeugten hochfrequenten Ausgangssignals derart vornimmt, dass die Leistung des empfangenen reflektierten Differenzsignals nahezu minimiert wird.

Gemäß einer weiteren Ausführungsform der Erfindung kann jede Sendeeinheit einen Detektor und eine steuerbare Verzögerungseinrichtung aufweisen, wobei dem Detektor eingangsseitig das empfangene reflektierte Differenzsignal zugeführt wird und der Detektor derart ausgebildet ist, dass er das zugeführte Signal auswertet und davon abhängig ein Steuersignal für die steuerbare Verzögerungseinrichtung erzeugt, die das Zwischensignal derart verzögert, dass die Leistung des empfangenen reflektierten Differenzsignals nahezu minimiert wird.

Im Detektor kann gemäß einer Ausführungsform der Erfindung ein Gradientenalgorithmus zur Minimierung der Leistung des empfangenen reflektierten Differenzsignals implementiert sein.

Vorteilhaft kann es aber auch sein, wenn gemäß einer weiteren Ausführungsform der Erfindung dem Detektor ein Zwischensignal, aus dem in einer Sendeeinheit das hochfrequente Ausgangssignal erzeugt wird, zugeführt wird und der Detektor derart ausgebildet ist, dass er eine Nachbildung des erwarteten empfangenen Differenzsignals bei Totalreflexion am Ausgang der Sendeeinheit berechnet, das berechnete Signal mit dem empfangenen reflektierten Differenzsignals korreliert und aus der so erhaltenen Laufzeitdifferenz zwischen den hochfrequenten Ausgangssignalen das Steuersignal für die steuerbare Verzögerungseinrichtung erzeugt. Insbesondere kann in diesem der Detektor ausgebildet sein, aus der Laufzeitdifferenz die halbe Phasendifferenz von jeder Sendeeinheit zu berechnen und davon abhängig ein entsprechendes Steuersignal für die steuerbare Verzögerungseinrichtung zu erzeugen.

Gemäß einer alternativen Ausführungsform der Erfindung kann auch die erste Sendeeinheit ausgebildet sein, eine Begrenzung der Leistung des empfangenen reflektierten Differenzsignals durchzuführen, und

die zweite Sendeeinheit ausgebildet ist, eine Phasendifferenz zwischen den hochfrequenten Ausgangssignalen einzustellen.

Gemäß einer weiteren Ausführungsform der Erfindung kann die erste Sendeeinheit derart ausgebildet sein, dass wiederholt folgende Schritte durchgeführt werden:

Bestimmen jeweils des maximalen Werts aus einem Block von gesendeten und empfangenen Daten;
Bestimmten des Verhältnisses von empfangenem zum gesendeten Signalwert als Reflexionsfaktor r1;
Erhöhen der gesendeten Leistung der ersten Sendeeinheit bis entweder der maximal erlaubte Wert des Reflexionsfaktors r1 oder die gewünschte zu sendende Leistung erreicht worden ist. Insbesondere kann die erste Sendeeinheit ausgebildet sein, den verwendeten Verstärkungsfaktor mit einem Tiefpass zu filtern, um große Sprünge in der Ausgangsleistung zu vermeiden.

Die zweite Sendeeinheit kann gemäß einer Ausführungsform der Erfindung derart ausgebildet sein, dass wiederholt folgende Schritte durchgeführt werden:

Bestimmten des jeweils maximalen Werts aus einem Block von gesendeten und empfangenen Daten;
Bestimmen des Verhältnisses von empfangenem zum gesendeten Signalwert als Reflexionsfaktor r2;
Feststellen auf der Grundlage der vorher verwendeten Verstärkungsfaktoren t2(k-1) des gesendeten Signals, ob eine Zunahme oder eine Abnahme der reflektierten Leistung auftritt, wenn das gesendete Signal verstärkt wird, gemäß der folgenden Formel:

$$s2(k) = (r2(k-1) - r2(k-2))/(t2(k-1) - t2(k-2));$$

Erhöhen der gesendeten Leistung der zweiten Sendeeinheit um einen bestimmten Prozentsatz, sofern s2(k) negativ und der Verstärkungsfaktor des zu sendenden Signals t2(k) kleiner als der maximal erlaubte Wert ist;
Reduzieren von t2(k) bis der Verstärkungsfaktor des zu sendenden Signals auf einem Minimalwert angekommen ist, wenn s2(k) positiv ist;
Regeln der Phase des von der zweiten Sendeeinheit emittierten Signals und
Regeln der Laufzeit des von der zweiten Sendeeinheit emittierten Signals.

Die Phase des von der zweiten Sendeeinheit emittierten Signals kann hierbei gemäß einer Ausführungsform der Erfindung mittels eines Gradientenalgorithmus geregelt werden. Insbesondere kann gemäß einer Ausführungsform der Erfindung der Gradientenalgorithmus ausgebildet sein, die Phase um den gleichen Wert wie im vorhergehenden Zeitschritt, wenn gilt rs(k) < rs(k-1), und ansonsten die Phase um den negativen Wert des vorhergehenden Zeitschritts zu ändern. Eine Schrittweitenregelung abhängig vom Betrag des gesendeten oder reflektierten Signals kann erfolgen.

Gemäß einer weiteren Ausführungsform der Erfindung kann die Laufzeitregelung derart ausgebildet sein, dass eine Feinjustage innerhalb eines bestimmten Bereiches erfolgt. Die Feinjustage kann gemäß einer Ausführungsform der Erfindung dadurch erfolgen, dass in einer Initialisierungsphase eine Reihe von möglichen Laufzeiten getestet und die Laufzeit mit minimalen Abweichungen des reflektierten vom gesendeten Signal ausgewählt wird. Gemäß einer alternativen Ausführungsform der Erfindung kann ein Suchalgorithmus, beispielsweise ein Gradientenalgorithmus zur Laufzeiteinstellung verwendet werden.

Jede Sendeeinheit weist gemäß einer Aüsführungsform der Erfindung einen Zirkulator auf, der zum Auskoppeln eines empfangenen reflektierten Differenzsignals vom hochfrequenten Ausgangssignal vorgesehen ist.

Ferner kann jede Sendeeinheit gemäß einer Ausführungsform der Erfindung einen Signalverarbeitungszweig umfassen, der eine Serienschaltung aus einer Schnittstellen-, Clipping-, Modulations- und Aufwärtsmischeinrichtung , einer steuerbaren Verzögerungseinrichtung, einer Vorverzerrungseinrichtung DPD, einem Digital-Analog-Wandler DAC einem Leistungsverstärker AMP und einem Zirkulator und eine Rückkopplung mit einem Analog-Digital-Wandler ADC vom Leistungsverstärker AMP auf die Vorverzerrungseinrichtung DPD aufweist.

Die Schnittstellen-, Clipping-, Modulations- und Aufwärtsmischeinrichtung kann gemäß einer weiteren Ausführungsform der Erfindung eine CPRI- und/oder OBSAI-Schnittstelle aufweisen.

Das Kopplungsnetzwerk kann gemäß einer Ausführungsform der Erfindung ein modifizierter Wilkinson-Teiler sein, bei dem zwischen den zwei Eingangsnetzwerken kein Widerstand vorgesehen ist und für den folgende Beziehung zwischen den Impedanzen $Z_L$ und $Z_T$ besteht: $Z_T = sqrt(2) Z_L$.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

Fig. 1    ein Ausführungsbeispiel eines Verzeigungsnetzwerks für eine erfindungsgemäße Anordnung zur Kopplung hochfrequente Ausgangssignale von Leistungsverstärkern einer Mobilfunk-Basisstation;

Fig. 2    ein Blockschaltbild einer Baugruppe einer Mobilfunk-Basisstation mit zwei CAT (Combined Amplifier and Transceiver), die erfindungsgemäß zum Einsatz mit der erfindungsgemäßen Kopplungsanordnung ausgebildet sind;

Fig. 3    ein Diagramm, in dem das beispielhafte Einlaufverhalten der Ausgangsignale der zwei CAT-Blöcke von Fig. 2 dargestellt ist, die über eine gemeinsame Antenne gesendet werden;

Fig. 4    ein Diagramm, in dem das beispielhafte Einlaufverhalten der reflektierten Differenzsignale der zwei CAT-Blöcke von Fig. 2 dargestellt ist; und

Fig. 5    eine Wilkinson-Teilerstruktur nach dem Stand der Technik.

Im Folgenden können gleiche und/oder funktional gleiche Elemente mit dem gleichen Bezugszeichen versehen sein. Absolute Größenangaben sind lediglich beispielhaft angegeben und nicht als die Erfindung einschränkend zu verstehen.

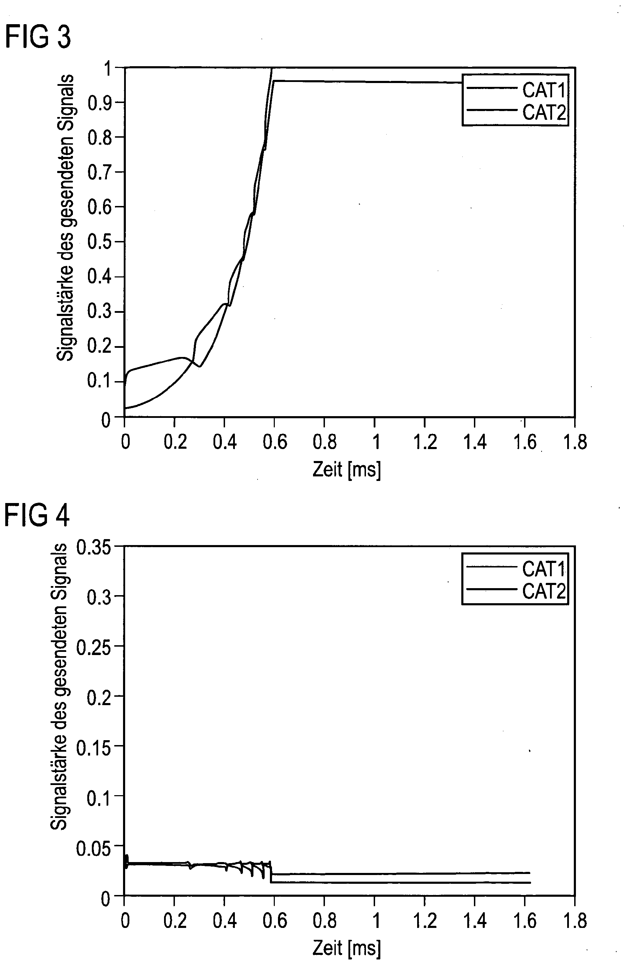

Zur möglichst verlustfreien Leistungsverteilung werden in der Hochfrequenztechnik Leistungsteiler wie beispielsweise ein Wilkinson-Teiler eingesetzt. Mit einem Wilkinson-Teiler kann ein an einem ersten Tor einlaufendes hochfrequentes Signal reflexionsfrei, verlustlos und zu gleichen Teilen auf ein zweites und drittes Tor des Teilers aufgeteilt werden. Aufgrund des im Wilkinson-Teilers verwendeten ohmschen Widerstands sind das zweite und dritte Tor entkoppelt, da bei Einspeisung eines hochfrequenten Signals in das zweite oder dritte Tor die halbe Leistung des Signals im ohmschen Widerstand in Wärme umgesetzt wird und das Signal mit halber Leistung am ersten Tor erscheint, während am dritten bzw. zweiten Tor kein Signal erscheint. Die Wilkinson-Teilerstruktur mit dem ohmschen Widerstand R und den Leistungsteilern in den Leitungsnetzwerken zum zweiten und dritten Tor mit den Impedanzen $Z_L$ und $Z_T$ ist in Fig. 4 gezeigt. Der ohmsche Widerstand R weist den Wert 2 $Z_L$ auf, um die verlustlose Leistungsaufteilung eines in das erste Tor einlaufenden hochfrequenten Signals auf das zweite und dritte Tor zu ermöglichen.

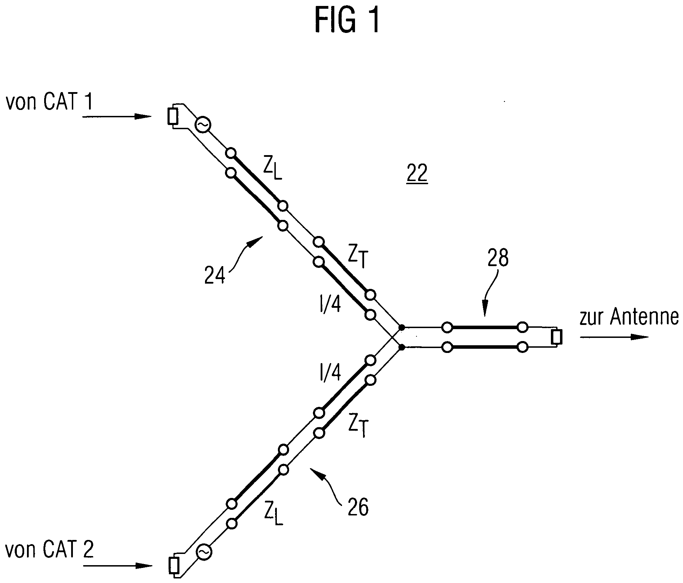

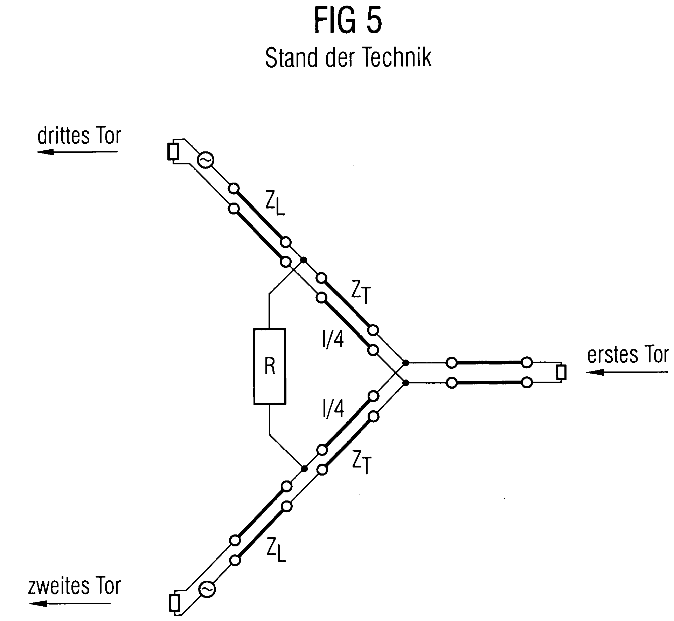

Fig 1 zeigt ein aus der in Fig. 5 gezeigten Wilkinson-Teilerstruktur abgeleitetes Verzeigungsnetzwerk 22, bei welcher im Unterschied zur Wilkinson-Teilerstruktur der ohmsche Widerstand R weggelassen wurde und folgende Beziehung zwischen den komplexen Widerständen $Z_L$ und $Z_T$ besteht:

$$Z_T = \text{sqrt}(2)\ Z_L$$

Das in Fig. 1 dargestellte Verzeigungsnetzwerk 10 ist zur Kombination der hochfrequenten Ausgangssignale zweier Sendeeinheiten einer Mobilfunk-Basisstation ausgebildet und umfasst hierzu zwei verstärkerseitige Eingangsnetzwerke 24 und 26 und ein antennenseitiges Ausgangsnetzwerk 28.

Die beiden Eingangsnetzwerke 24 und 26 umfassen jeweils antennenseitig angepasste Leistungsteiler aus den Impedanzen $Z_L$ und $Z_T$, die aber für Differenzsignale am jeweils anderen Eingangsnetzwerk keine Anpassung aufweisen, so dass die Differenzsignale reflektiert werden. Die reflektierten Differenzsignale können entweder direkt oder als Basis für eine Synchronisation der Ausgangssignale der Sendeeinheiten verwendet werden. Aus einem reflektierten Differenzsignal kann insbesondere eine Kenngröße wie beispielsweise die maximale Amplitude abgeleitet werden, die als Kriterium für die Synchronisation verwendet wird, wie im Folgenden noch im Detail beschrieben wird.

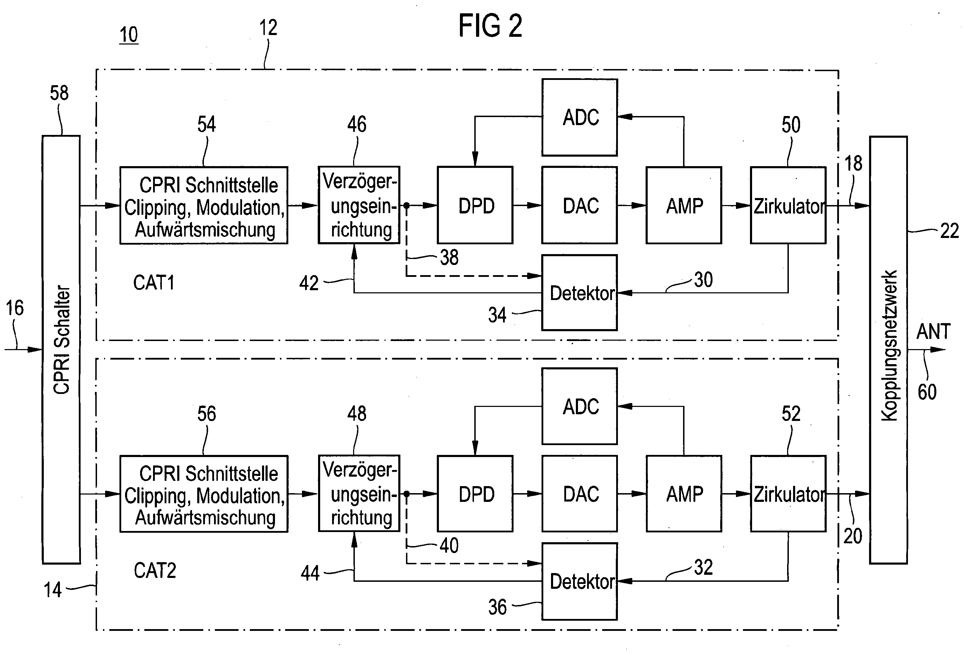

Fig. 2 zeigt eine Anordnung zur Kopplung hochfrequenter Ausgangssignale 10, die beispielsweise in Form einer Baugruppe einer Mobilfunk-Basisstation ausgebildet sein kann. Die Anordnung 10 umfasst zwei Sendeeinheiten 12 (CAT 1) und 14 (CAT 2) zur Erzeugung hochfrequenter (Träger-)Signale, die über eine gemeinsame Antennenanordnung ausgestrahlt werden sollen.

Eingangsseitig weist die Anordnung 10 einen CPRI-Schalter 58 auf, dem ein digitales Basisbandsignal, genauer gesagt einen digitalen Basisbanddatenstrom zugeführt wird, und der daraus die digitalen Basisbandeingangssignale für die beiden Sendeeinheiten 12 und 14 erzeugt. Die Sendeeinheiten 12 und 14 erzeugen aus jedem zugeführten digitalen Basisbandsignal ein analoges hochfrequentes (Träger-)Ausgangssignal, das direkt über eine Antennenanordnung abgestrahlt werden kann.

Das auf eine Sendeeinheit 12 bzw. 14 über den CPRI-Schalter 58 geschaltete digitale Basisbandsignal wird einer CPRI-Schnittstellen-, Clipping-, Modulations- und Aufwärtsmischeinrichtung 54 bzw. 56 zugeführt, die das PAR (Peak to Average Ratio) des zugeführten Signals verringert, das derart begrenzte Signale moduliert und auf eine höhere Frequenz zum Ausstrahlen über eine Antenne mischt. Das hochfrequente digitale Ausgangssignal der Einrichtung 54 bzw. 56 wird einer digitalen Verzögerungseinrichtung 46 bzw. 48 zugeführt, die abhängig von einem Steuersignal 42 bzw. 44 die Verzögerung und damit Phase des zugeführten digitalen hochfrequenten Signals einstellt. Das verzögerte digitale hochfrequente Signal wird anschließend einer digitalen Vorverzerrungseinrichtung DPD (Digital Predistortion) zugeführt. Anschließend wird das vorverzerrte Signal in ein analoges Signal mittels eines Digital-Analog-Wandlers DAC (Digital-Analog-Converter) umgewandelt und von einem Leistungsverstärker AMP verstärkt. Über einen Zirkulator 50 bzw. 52 wird das derart verstärkte hochfrequente Ausgangssignal 18 bzw. 20 einem Eingangsnetzwerk 24 bzw. 26 des Kopplungsnetzwerks 22 zugeführt und mit dem hochfrequenten Ausgangssignal der anderen Sendeeinheit 14 bzw. 12 gekoppelt. Das gekoppelte hochfrequente Signal 60 wird einer (nicht dargestellten) gemeinsamen Antennenanordnung zur Ausstrahlung zugeführt.

Der Zirkulator 50 bzw. 52 der Sendeeinheit 12 bzw. 14 koppelt aus dem hochfrequenten Ausgangssignal 18 bzw. 20 ein vom Eingangsnetzwerk 24 bzw. 26 reflektiertes Differenzsignal aus und führt es einem Detektor 34 bzw. 36 zur Synchronisation der hochfrequenten Ausgangssignale 18 und 20 und Minimierung der Leistung der von den Eingangsnetzwerken 24 und 26 reflektierten Differenzsignale zu.

Im Folgenden werden nun der Ablauf der Synchronisierung und die Leistungsminimierung der reflektierten Differenzsignale in den Sendeeinheiten 12 und 14 erläutert. Als Kriterium für die Synchronisation der hochfrequenten Ausgangssignale 18 und 20 werden wie bereits angedeutet die reflektierten Differenzsignale oder davon abgeleitete Kenngrößen wie beispielsweise ihre maximale Amplitude verwendet. Zur Synchronisation ist in jeder Sendeeinheit 12 und 14 ein Algorithmus implementiert, insbesondere im Detektor 34 bzw. 36, der darauf abzielt, die Leistung des Fehlersignals am Detektoreingang (Zirkulatorausgang) zu minimieren. Hierzu kann ein Gradientenalgorithmus eingesetzt werden. Vorteilhaft ist es aber auch, das zu sendende Signal als Referenz dem Detektor 34 bzw. 36 zuzuführen, beispielsweise ein Zwischensignal 38 bzw. 40 des zu sendenden Signals, das noch nicht vorverzerrt und verstärkt ist. Im Detektor 34 bzw. 36 wird dann eine Nachbildung des erwarteten Zirkulatorausgangssignals bei Totalreflexion am Ausgang der Sendeeinheit 12 bzw. 14 berechnet. Durch Korrelation dieses berechneten Signals mit dem Gemessenen kann die Laufzeitdifferenz zwischen den von beiden Sendeeinheiten 12 und 14 gesendeten hochfrequenten Ausgangssignalen 18 und 20 ermittelt werden. Beispielsweise kann unter der Annahme, dass die zweite Sendeeinheit 14 den gleichen Algorithmus wie die erste Sendeeinheit 12 ausführt, die halbe berechnete Phasendifferenz von jeder Sendeeinheit 12 und 14 korrigiert werden und dadurch ein kombiniertes Ausgangssignal maximaler Leistung erhalten werden.

Als Alternative zu einem Regelalgorithmus kann die erste Sendeeinheit 12 sich ausschließlich auf die Begrenzung der reflektierten Leistung des Differenzsignals beschränken und ein Ausgleich der Phasendifferenz ausschließlich durch die zweite Sendeeinheit 14 erfolgen. Dieses Vorgehen wird im folgenden anhand einer Simulation dargestellt.

In der ersten Sendeeinheit 12 werden wiederholt folgende Schritte durchgeführt:

- Aus einem Block von gesendeten und empfangenen Daten wird jeweils der maximale Wert bestimmt;
- das Verhältnis von empfangenem zum gesendeten Signalwert wird bestimmt (Reflexionsfaktor r1);
- die gesendete Leistung der ersten Sendeeinheit 12 wird erhöht, bis entweder der maximal erlaubte Wert des Reflexionsfaktors oder die gewünschte zusendende Leistung erreicht worden ist. Um aber große Sprünge in der Ausgangsleistung zu vermeiden, kann der verwendete Verstärkungsfaktor tief passgefiltert werden.

In der zweiten Sendeeinheit 14 werden wiederholt folgende Schritte durchgeführt:

- Aus einem Block von gesendeten und empfangenen Daten wird jeweils der maximale Wert bestimmt;
- das Verhältnis von empfangenem zum gesendeten Signalwert wird bestimmt (Reflexionsfaktor r2);
- auf der Grundlage der vorher verwendeten Verstärkungsfaktoren t2(k-1) des gesendeten Signals wird festgestellt, ob eine Zunahme oder eine Abnahme der reflektierten Leistung auftritt, wenn das gesendete Signal verstärkt wird
$$s2(k) = (r2(k-1) - r2(k-2))/(t2(k-1) - t2(k-2))$$
- die gesendete Leistung der zweiten Sendeeinheit 14 wird um einen bestimmten Prozentsatz erhöht, sofern s2(k) negativ und der Verstärkungsfaktor des zu sendenden Signals t2(k) kleiner als der maximal erlaubte Wert ist. Ist s2(k) positiv, so wird t2(k) reduziert, bis der Verstärkungsfaktor des zu sendenden Signals auf einem Minimalwert angekommen ist.
- Die Phase des von der zweiten Sendeeinheit 14 emittierten Signals muss geregelt werden. Hierzu kann ein einfacher Gradientenansatz verwendet werden: ist rs(k) < rs(k-1), dann wird die Phase um den gleichen Wert wie im vorhergehenden Zeitschritt geändert, ansonsten wird die Phase um den negativen Wert des vorhergehenden Zeitschritts geändert. Eine Schrittweitenregelung abhängig vom Betrag des gesendeten oder reflektierten Signals kann erfolgen.
- Die Laufzeitregelung kann von folgender Tatsache ausgehen: Wenn ein reflektiertes Signal nicht zum Gesendeten proportional ist, dann besteht ein Laufzeitfehler. Durch CPRI ist die Einstellung schon genau, daher ist nur eine Feinjustage innerhalb eines bestimmten Bereiches notwendig. Dies kann beispielsweise dadurch erfolgen, dass in einer Initialisierungsphase eine Reihe von möglichen Laufzeiten getestet und die Laufzeit mit minimalen Abweichungen des reflektierten vom gesendeten Signal ausgewählt wird. Alternativ ist hier beispielsweise ein Gradientenalgorithmus zur Laufzeiteinstellung möglich.

Das durch den oben beschriebenen Algorithmus erzielbare Einlaufverhalten ist in Fig. 3 und 4 dargestellt. Fig. 3 zeigt den Verlauf der hochfrequenten Ausgangssignale der beiden Sendeeinheiten CAT1 und CAT2. Fig. 4 zeigt den Verlauf der empfangenen reflektierten Differenzsignale der beiden Sendeeinheiten CAT1 und CAT2. Nach einer Einregelzeit von etwa 0,6 Millisekunden sind die Amplituden der hochfrequenten Ausgangssignale maximal und die der Differenzsignale minimal.

An dieser Stelle Sachen gemerkt, dass der oben erläuterte Algorithmus sowohl im Hard- als auch in Software implementiert werden kann. Es ist auch möglich, eine gemischte Implementierung mit Hard- und Softwareanteilen vorzusehen, bei der beispielsweise rechenintensive Operationen von spezieller Hardware ausgeführt werden.

Die vorliegende Erfindung eignet sich besonders gut zum Einsatz in Mobilfunkbasisstationen, in denen mehrere Trägersignale, die gegebenenfalls unterschiedlichen Funkkommunikationsstandards zugeordnet sein können, zusammengefasst und als kombiniertes Trägersignal mit einer gemeinsamen Antennenanordnung, beispielsweise einer Antenne abgestrahlt werden. Schließlich sei darauf hingewiesen, dass die Erfindung nicht nur wie oben beschrieben mit zwei Sendeeinheiten, sondern im Prinzip mit beliebig vielen Sendeeinheiten implementiert werden kann.

Bezugszeichen und Abkürzungen

10 Anordnung zur Kopplung hochfrequenter Ausgangssignale
12 erste Sendeeinheit CAT 1
14 zweite Sendeeinheit CAT 2
16 digitales Basisbandsignal
18 hochfrequentes Ausgangssignal der ersten Sendeeinheit 12
20 hochfrequentes Ausgangssignal der zweiten Sendeeinheit 14
22 Kopplungsnetzwerk (modifizierter Wilkinson-Teiler)
24, 26 verstärkerseitige Eingangsnetzwerke des Verzeigungsnetzwerks 22
28 antennenseitiges Ausgangsnetzwerk des Verzeigungsnetzwerks 22
30, 32 reflektiertes Differenzsignal
34, 36 Detektor
38, 40 Zwischensignal
42, 44 Steuersignal
46, 48 steuerbare Verzögerungseinrichtung
50, 52 Zirkulator
54, 56 Schnittstellen-, Clipping-, Modulations- und Aufwärtsmischeinrichtung
58 CPRI Schalter
60 gekoppeltes hochfrequentes Ausgangssignal
ADC Analog Digital Converter
AMP Amplifier
CAT Combined Amplifier and Transceiver
CPRI Common Public Radio Interface
DAC Digital Analog Converter
DPD Digital Predistortion
OBSAI Open Base Station Architecture Initiative

**Patentansprüche**

1.  Anordnung (10) zur Kopplung hochfrequenter Ausgangssignale, die zum Abstrahlen über eine gemeinsame Antennenanordnung vorgesehen sind, mit
    einer ersten und einer zweiten Sendeeinheit (12, 14), die jeweils ausgebildet sind, aus einem digitalen Eingangssignal (16) ein hochfrequentes Ausgangssignal (18, 20) zur Abstrahlung über eine gemeinsame Antennenanordnung zu erzeugen, und

einem Kopplungsnetzwerk (22), das zwei Eingangsnetzwerke (24, 26) für die hochfrequenten Ausgangssignale (18, 20) und ein antennenseitiges Ausgangsnetzwerk (28) zum Ankoppeln an die gemeinsame Antennenanordnung umfasst, wobei die Eingangsnetzwerke (24, 26) jeweils antennenseitig angepasste Leistungsteiler aus den Impedanzen $Z_L$ und $Z_T$ umfassen, die aber für die Differenzsignale der Ausgangssignale am jeweils anderen Eingangsnetzwerk keine Anpassung aufweisen, sodass ein Differenzsignal (30, 32) am jeweils anderen Eingangsnetzwerk reflektiert wird, wobei

jede Sendeeinheit (12, 14) derart ausgebildet ist, dass sie ein empfangenes reflektiertes Differenzsignal (30, 32) auswertet und abhängig von der Auswertung eine Synchronisation des erzeugten hochfrequenten Ausgangssignals (18, 20) derart vornimmt, dass die Leistung des empfangenen reflektierten Differenzsignals (30, 32) nahezu minimiert wird.

2.  Anordnung gemäß Anspruch 1,
    **dadurch gekennzeichnet, dass** im Detektor (34, 36) ein Gradientenalgorithmus zur Minimierung der Leistung des empfangenen reflektierten Differenzsignals (30, 32) implementiert ist.

3.  Anordnung gemäß Anspruch 1 oder 2,
    **dadurch gekennzeichnet, dass** dem Detektor (34, 36) ein Zwischensignal (38, 40), aus dem in einer Sendeeinheit (12, 14) das hochfrequente Ausgangssignal (18, 20) erzeugt wird, zugeführt wird und der Detektor (34, 36) derart ausgebildet ist, dass er eine Nachbildung des erwarteten empfangenen Differenzsignals (30, 32) bei Totalreflexion am Ausgang der Sendeeinheit (12, 14) berechnet, das berechnete Signal mit dem empfangenen reflektierten Differenzsignals (30, 32) korreliert und aus der so erhaltenen Laufzeitdifferenz zwischen den hochfrequenten Ausgangssignalen (18, 20) das Steuersignal (42, 44) für die steuerbare Verzögerungseinrichtung (46, 48) erzeugt.

4.  Anordnung gemäß Anspruch 3,
    **dadurch gekennzeichnet, dass** der Detektor (34, 36) ausgebildet ist, aus der Laufzeitdifferenz die halbe Phasendifferenz von jeder Sendeeinheit (12, 14) zu berechnen und davon abhängig ein entsprechendes Steuersignal (42, 44) für die steuerbare Verzögerungseinrichtung (46, 48) zu erzeugen.

5.  Anordnung gemäß Anspruch 1,
    **dadurch gekennzeichnet, dass** die erste Sendeeinheit (12) ausgebildet ist, eine Begrenzung der Leistung des empfangenen reflektierten Differenzsignals durchzuführen, und
    die zweite Sendeeinheit (14) ausgebildet ist, eine Phasendifferenz zwischen den hochfrequenten Ausgangssignalen (18, 20) einzustellen.

6.  Anordnung gemäß Anspruch 5,
    **dadurch gekennzeichnet, dass** die erste Sendeeinheit (12) derart ausgebildet ist, dass wiederholt folgende Schritte durchgeführt werden:

    - Bestimmen jeweils des maximalen Werts aus einem Block von gesendeten und empfangenen Daten;
    - Bestimmten des Verhältnisses von empfangenem zum gesendeten Signalwert als Reflexionsfaktor r1;
    - Erhöhen der gesendeten Leistung der ersten Sendeeinheit (12) bis entweder der maximal erlaubte Wert des Reflexionsfaktors r1 oder die gewünschte zu sendende Leistung erreicht worden ist.

7.  Anordnung gemäß Anspruch 6,
    **dadurch gekennzeichnet, dass** die erste Sendeeinheit (12) ausgebildet ist, den verwendeten Verstärkungsfaktor mit einem Tiefpass zu filtern.

8.  Anordnung gemäß Anspruch 5, 6 oder 7,
    **dadurch gekennzeichnet, dass** die zweite Sendeeinheit (14) derart ausgebildet ist, dass wiederholt folgende Schritte durchgeführt werden:

    - Bestimmten des jeweils maximalen Werts aus einem Block von gesendeten und empfangenen Daten;
    - Bestimmen des Verhältnisses von empfangenem zum gesendeten Signalwert als Reflexionsfaktor r2;
    - Feststellen auf der Grundlage der vorher verwendeten Verstärkungsfaktoren t2(k-1) des gesendeten Signals, ob eine Zunahme oder eine Abnahme der reflektierten Leistung auftritt, wenn das gesendete Signal verstärkt wird, gemäß der folgenden Formel:

$$s2(k) = (r2(k-1) - r2(k-2))/(t2(k-1) - t2(k-2));$$

- Erhöhen der gesendeten Leistung der zweiten Sendeeinheit (14) um einen bestimmten Prozentsatz, sofern s2(k) negativ und der Verstärkungsfaktor des zu sendenden Signals t2(k) kleiner als der maximal erlaubte Wert ist;
- Reduzieren von t2(k) bis der Verstärkungsfaktor des zu sendenden Signals auf einem Minimalwert angekommen ist, wenn s2(k) positiv ist;
- Regeln der Phase des von der zweiten Sendeeinheit (14) emittierten Signals und
- Regeln der Laufzeit des von der zweiten Sendeeinheit (14) emittierten Signals.

9. Anordnung gemäß Anspruch 8,
**dadurch gekennzeichnet, dass** die Phase des von der zweiten Sendeeinheit (14) emittierten Signals mittels eines Gradientenalgorithmus geregelt wird.

10. Anordnung gemäß Anspruch 9,
**dadurch gekennzeichnet, dass** der Gradientenalgorithmus ausgebildet ist, die Phase um den gleichen Wert wie im vorhergehenden Zeitschritt, wenn gilt rs(k) < rs(k-1), und ansonsten die Phase um den negativen Wert des vorhergehenden Zeitschritts zu ändern.

11. Anordnung gemäß Anspruch 10,
**dadurch gekennzeichnet, dass** eine Schrittweitenregelung abhängig vom Betrag des gesendeten oder reflektierten Signals erfolgt.

12. Anordnung gemäß Anspruch 8, 9, 10 oder 11,
**dadurch gekennzeichnet, dass** die Laufzeitregelung derart ausgebildet ist, eine Feinjustage innerhalb eines bestimmten Bereiches erfolgt.

13. Anordnung gemäß Anspruch 12,
**dadurch gekennzeichnet, dass** die Feinjustage dadurch erfolgt, dass in einer Initialisierungsphase eine Reihe von möglichen Laufzeiten getestet und die Laufzeit mit minimalen Abweichungen des reflektierten vom gesendeten Signal ausgewählt wird.

14. Anordnung gemäß Anspruch 12
**dadurch gekennzeichnet, dass** ein Suchalgorithmus zur Laufzeiteinstellung verwendet wird.

15. Anordnung gemäß einem der vorhergehenden Ansprüche,
**dadurch gekennzeichnet, dass** jede Sendeeinheit (12, 14) einen Zirkulator (50,52) aufweist, der zum Auskoppeln eines empfangenen reflektierten Differenzsignals (30, 32) vom hochfrequenten Ausgangssignal (18, 20) vorgesehen ist.

16. Anordnung gemäß einem der vorhergehenden Ansprüche,
**dadurch gekennzeichnet, dass** jede Sendeeinheit (12, 14) einen Signalverarbeitungszweig umfass, der eine Serienschaltung aus einer Schnittstellen-, Clipping-, Modulations- und Aufwärtsmischeinrichtung (54, 56) einer steuerbaren Verzögerungseinrichtung (46, 48), einer Vorverzerrungseinrichtung DPD, einem Digital-Analog-Wandler DAC, einem Leistungsverstärker AMP und einem Zirkulator (50, 52) und eine Rückkopplung mit einem Analog-Digital-Wandler DAC vom Leistungsverstärker AMP auf die Vorverzerrungseinrichtung DCP aufweist.

17. Anordnung gemäß einem der vorhergehenden Ansprüche,
**dadurch gekennzeichnet, dass** die Schnittstellen-, Clipping-, Modulations- und Aufwärtsmischeinrichtung (54, 56) eine CPRI- und/oder OBASI-Schnittstelle aufweist.

18. Anordnung gemäß einem der vorhergehenden Ansprüche,
**dadurch gekennzeichnet, dass** das Kopplungsnetzwerk (22) ein modifizierter Wilkinson-Teiler ist, bei dem zwischen den zwei Eingangsnetzwerken (24,26) kein Widerstand vorgesehen ist, und für den folgende Beziehung zwischen den Impedanzen $Z_L$ und $Z_T$ besteht: $Z_T$ = sqrt (2) $Z_L$.

**Claims**

1. Arrangement (10) for coupling radio-frequency output signals that are provided for emission via a shared antenna arrangement, having

   a first and a second transmission unit (12, 14), which are each designed to produce from a digital input signal (16) a radio-frequency output signal (18, 20) for emission via a shared antenna arrangement, and

   a coupling network (22) that comprises two input networks (24, 26) for the radio-frequency output signals (18, 20) and an antenna-side output network (28) for coupling to the shared antenna arrangement, wherein the input networks (24, 26) each comprise power splitters matched on the antenna side comprising impedances $Z_L$ and $Z_T$, which, however, have no matching for the difference signals of the output signals on the corresponding other input network, so that a difference signal (30, 32) is reflected from the corresponding other input network, each transmission unit (12, 14) being designed such that it evaluates a received reflected difference signal (30, 32) and takes the evaluation as a basis for performing synchronization of the produced radio-frequency output signal (18, 20) such that the power of the received reflected difference signal (30, 32) is almost minimized.

2. Arrangement according to Claim 1,
   **characterized in that**
   a gradient algorithm for minimizing the power of the received reflected difference signal (30, 32) is implemented in the detector (34, 36).

3. Arrangement according to Claim 1 or 2,
   **characterized in that**
   the detector (34, 36) is supplied with an intermediate signal (38, 40), from which the radio-frequency output signal (18, 20) is produced in a transmission unit (12, 14), and the detector (34, 36) is designed such that it computes a reproduction of the expected received difference signal (30, 32) on total reflection from the output of the transmission unit (12, 14), correlates the computed signal with the received reflected difference signal (30, 32) and, from the propagation time difference obtained in this manner between the radio-frequency output signals (18, 20), produces the control signal (42, 44) for the controllable delay device (46, 48).

4. Arrangement according to Claim 3,
   **characterized in that**
   the detector (34, 36) is designed to compute from the propagation time difference half the phase difference of each transmission unit (12, 14) and to take this as a basis for producing a corresponding control signal (42, 44) for the controllable delay device (46, 48).

5. Arrangement according to Claim 1,
   **characterized in that**
   the first transmission unit (12) is designed to perform limiting for the power of the received reflected difference signal, and
   the second transmission unit (14) is designed to set a phase difference between the radio-frequency output signals (18, 20).

6. Arrangement according to Claim 5,
   **characterized in that**
   the first transmission unit (12) is designed such that the following steps are repeatedly performed:

   - determining the respective maximum value from a block of sent and received data;
   - determining the ratio of the received signal value to the sent signal value as a reflection factor r1;
   - increasing the power sent by the first transmission unit (12) until either the maximum permitted value of the reflection factor r1 or the desired power to be sent has been reached.

7. Arrangement according to Claim 6,
   **characterized in that**
   the first transmission unit (12) is designed to filter the gain factor used using a low-pass filter.

8. Arrangement according to Claim 5, 6 or 7,
   **characterized in that**
   the second transmission unit (14) is designed such that the following steps are repeatedly performed:

- determining the respective maximum value from a block of sent and received data;
- determining the ratio of the received signal value to the sent signal value as a reflection factor r2;
- taking the gain factors t2 (k-1) previously used for the sent signal as a basis for establishing whether an increase or a decrease in the reflected power occurs when the sent signal is amplified, in accordance with the following formula:

$$s2(k) = (r2(k-1) - r2(k-2))/(t2(k-1) - t2(k-2));$$

- increasing the power sent by the second transmission unit (14) by a determined percentage, provided that s2(k) is negative and the gain factor of the signal t2(k) to be sent is lower than the maximum permitted value;
- reducing t2 (k) until the gain factor of the signal to be sent has arrived at a minimum value when s2 (k) is positive;
- regulating the phase of the signal emitted by the second transmission unit (14), and
- regulating the propagation time of the signal emitted by the second transmission unit (14).

9. Arrangement according to Claim 8,
   **characterized in that**
   the phase of the signal emitted by the second transmission unit (14) is regulated by means of a gradient algorithm.

10. Arrangement according to Claim 9,
    **characterized in that**
    the gradient algorithm is designed to change the phase by the same value as in the preceding time step when rs(k) < rs(k-1) holds true, and otherwise to change the phase by the negative value of the preceding time step.

11. Arrangement according to Claim 10,
    **characterized in that**
    step size regulation is effected on the basis of the absolute value of the sent or reflected signal.

12. Arrangement according to Claim 8, 9, 10 or 11,
    **characterized in that**
    the propagation time regulation is designed such that fine adjustment is effected within a determined range.

13. Arrangement according to Claim 12,
    **characterized in that**
    the fine adjustment is effected by virtue of a series of possible propagation times being tested in an initialization phase and the propagation time with minimum discrepancies between the reflected and sent signals being selected.

14. Arrangement according to Claim 12,
    **characterized in that**
    a search algorithm is used for the propagation time setting.

15. Arrangement according to one of the preceding claims,
    **characterized in that**
    each transmission unit (12, 14) has a circulator (50, 52) that is provided for decoupling a received reflected difference signal (30, 32) from the radio-frequency output signal (18, 20).

16. Arrangement according to one of the preceding claims,
    **characterized in that**
    each transmission unit (12, 14) comprises a signal processing arm that has a series circuit, comprising an interface, clipping, modulation and up-conversion device (54, 56), a controllable delay device (46, 48), a predistortion device DPD, a digital-analogue converter DAC, a power amplifier AMP and a circulator (50, 52), and a feedback loop with an analogue-digital converter ADC from the power amplifier AMP to the predistortion device DPD.

17. Arrangement according to Claim 16,
    **characterized in that**
    the interface, clipping, modulation and up-conversion device (54, 56) has a CPRI and/or OBSAI interface.

**18.** Arrangement according to one of the preceding claims, **characterized in that** the coupling network (22) is a modified Wilkinson divider in which there is no resistor provided between the two input networks (24, 26) and for which the following relationship exists between the impedances $Z_L$ and $Z_T$: $Z_T$ = sqrt(2) $Z_L$.

## Revendications

**1.** Agencement (10) destiné au couplage de signaux de sortie haute fréquence qui sont prévus pour être émis via un dispositif d'antenne commun, comportant :

une première et une deuxième unité émettrice (12, 14), chacune étant réalisée pour produire, à partir d'un signal d'entrée numérique (16), un signal de sortie haute fréquence (18, 20) destiné à être émis via un dispositif d'antenne commun et
un réseau de couplage (22) qui comprend deux réseaux d'entrée (24, 26) pour les signaux de sortie haute fréquence (18, 20) et un réseau de sortie (28) côté antenne pour couplage au dispositif d'antenne commun, les réseaux d'entrée (24, 26) comprenant respectivement des diviseurs de puissance adaptés côté antenne et formés à partir des impédances ZL et ZT, mais ne présentant pas d'adaptation pour les signaux différentiels des signaux de sortie au niveau de l'autre réseau d'entrée respectif, de sorte qu'un signal différentiel (30, 32) est réfléchi au niveau de l'autre réseau d'entrée respectif, chaque unité émettrice (12, 14) étant réalisée de telle sorte qu'elle évalue un signal différentiel réfléchi reçu (30, 32) et procède, en fonction de l'évaluation, à une synchronisation du signal de sortie haute fréquence généré (18, 20), de telle sorte que la puissance du signal différentiel réfléchi reçu (30, 32) est pratiquement minimisée.

**2.** Agencement selon la revendication 1, **caractérisé en ce qu'**est implémenté, dans le détecteur, (34, 36) un algorithme de gradient pour minimiser la puissance du signal différentiel réfléchi reçu (30, 32).

**3.** Agencement selon la revendication 1 ou 2, **caractérisé en ce qu'**un signal intermédiaire (38, 40), à partir duquel le signal de sortie haute fréquence (18, 20) est généré dans une unité émettrice (12, 14), est envoyé sur le détecteur (34, 36) et **en ce que** le détecteur (34, 36) est réalisé de telle sorte qu'il calcule une reproduction du signal différentiel reçu attendu (30, 32) en cas de réflexion totale à la sortie de l'unité émettrice (12, 14), que le signal calculé corrèle avec le signal différentiel réfléchi reçu (30, 32) et génère, à partir de la différence de temps de propagation ainsi obtenue entre les signaux de sortie haute fréquence (18, 20), le signal de commande (42, 44) pour le dispositif retardateur commandable (46, 48) .

**4.** Agencement selon la revendication 3, **caractérisé en ce que** le détecteur (34, 36) est réalisé pour calculer la demi-différence de phase de chaque unité émettrice (12, 14) à partir de la différence de temps de propagation et pour générer, indépendamment de cela, un signal de commande correspondant (42, 44) pour le dispositif retardateur commandable (46, 48).

**5.** Agencement selon la revendication 1, **caractérisé en ce que** la première unité émettrice (12) est réalisée pour opérer une limitation de la puissance du signal différentiel réfléchi reçu et **en ce que** la deuxième unité émettrice (14) est réalisée pour régler une différence de phase entre les signaux de sortie haute fréquence (18, 20).

**6.** Agencement selon la revendication 5, **caractérisé en ce que** la première unité émettrice (12) est réalisée de telle sorte que les étapes suivantes sont exécutées itérativement :

- détermination, respectivement, de la valeur maximale à partir d'un bloc de données émises et reçues ;
- détermination du rapport entre valeur de signal reçue et valeur de signal émise comme facteur de réflexion r1 ;
- augmentation de la puissance émise de la première unité émettrice (12) jusqu'à l'obtention soit de la valeur maximale autorisée du facteur de réflexion r1 soit de la puissance souhaitée à émettre.

**7.** Agencement selon la revendication 6, **caractérisé en ce que** la première unité émettrice (12) est réalisée pour filtrer le facteur d'amplification utilisé au moyen d'un filtre passe-bas.

**8.** Agencement selon la revendication 5, 6 ou 7, **caractérisé en ce que** la deuxième unité émettrice (14) est réalisée de telle sorte que les étapes suivantes sont exécutées itérativement :

- détermination de la valeur maximale respective à partir d'un bloc de données émises et reçues ;
- détermination du rapport entre valeur de signal reçue et valeur de signal émise comme facteur de réflexion r2 ;
- constatation, sur la base des facteurs d'amplification t2(k-1) du signal émis utilisés précédemment, de la survenance d'une augmentation ou d'une diminution de la puissance réfléchie lorsque le signal émis est amplifié, selon la formule suivante :

```
s2(k) = (r2(k-l) - r2(k-2))/(t2(k-l) - t2(k-2)) ;
```

- augmentation de la puissance émise de la deuxième unité émettrice (14) d'un pourcentage déterminé, dans la mesure où s2(k) est négatif et où le facteur d'amplification du signal t2(k) à émettre est inférieur à la valeur maximale autorisée ;
- réduction de t2(k) jusqu'à ce que le facteur d'amplification du signal à émettre ait atteint une valeur minimale lorsque s2(k) est positif ;
- réglage de la phase du signal émis par la deuxième unité émettrice (14) et
- réglage du temps de propagation du signal émis par la deuxième unité émettrice (14).

9. Agencement selon la revendication8, **caractérisé en ce que** la phase du signal émis par la deuxième unité émettrice (14) est réglée au moyen d'un algorithme de gradient.

10. Agencement selon la revendication9, **caractérisé en ce que** l'algorithme de gradient est conçu pour modifier la phase de la même valeur qu'au pas de temps précédent si rs(k) < rs(k-1) et sinon pour modifier la phase de la valeur négative du pas de temps précédent.

11. Agencement selon la revendication10, **caractérisé en ce qu'**un réglage de pas de temps est effectué en fonction de la valeur absolue du signal émis ou réfléchi.

12. Agencement selon la revendication8, 9, 10ou11, **caractérisé en ce que** le réglage du temps de propagation est conçu de telle sorte qu'un ajustement fin a lieu dans une plage déterminée.

13. Agencement selon la revendication12, **caractérisé en ce que** l'ajustement fin a lieu du fait que, dans une phase d'initialisation, une série de temps de propagation possibles est testée et que le temps de propagation présentant des écarts minimaux entre le signal réfléchi et le signal émis est choisi.

14. Agencement selon la revendication12, **caractérisé en ce qu'**un algorithme de recherche est utilisé pour le réglage du temps de propagation.

15. Agencement selon l'une des revendications précédentes, **caractérisé en ce que** chaque unité émettrice (12, 14) comporte un circulateur (50, 52) prévu pour découpler un signal différentiel réfléchi reçu (30, 32) du signal de sortie haute fréquence (18, 20).

16. Agencement selon l'une des revendications précédentes, **caractérisé en ce que** chaque unité émettrice (12, 14) comprend une branche de traitement de signaux qui comporte un montage en série composé d'un dispositif d'interface, de clippage, de modulation et de mélange élévateur (54, 56), d'un dispositif retardateur commandable (46, 48), d'un dispositif de prédistorsion DPD, d'un convertisseur numérique-analogique DAC, d'un amplificateur de puissance AMP et d'un circulateur (50, 52), et une rétroaction avec un convertisseur analogique numérique ADC de l'amplificateur de puissance AMP au dispositif de prédistorsion DPD.

17. Agencement selon la revendication 17, **caractérisé en ce que** le dispositif d'interface, de clippage, de modulation et de mélange élévateur (54, 56) présente une interface CPRI et/ou une interface OBSAI.

18. Agencement selon l'une des revendications précédentes, **caractérisé en ce que** le réseau de couplage (22) est un diviseur Wilkinson modifié dans lequel aucune résistance n'est prévue entre les deux réseaux d'entrée (24, 26) et pour lequel on a la relation suivante entre les impédances ZL et ZT :

$$Z_T = \text{sqrt}(2)\ Z_L.$$

# FIG 1

von CAT 1

$Z_L$

$Z_T$

$22$

$l/4$

$24$

$28$

zur Antenne

$l/4$

$Z_T$

$26$

$Z_L$

von CAT 2

# FIG 2

EP 1 962 423 B1

FIG 3

FIG 4

# FIG 5
## Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003186656 A